# EUROPÄISCHE PATENTSCHRIFT

(11) **EP 0 825 369 B1**
(45) Veröffentlichungstag und Bekanntmachung des Hinweises auf die Patenterteilung: **31.10.2001**
(21) Anmeldenummer: 97113618.9
(22) Anmeldetag: 07.08.1997
(51) Int. Cl.: F16K 31/06, H01F 7/13, F23N 1/00, G05D 16/20

(54) **Einstellvorrichtung für den magnetischen Widerstand eines Magnetkreises in einem Magnetventil**
Adjustment device for the impedance of the magnetic path of an electromagnetic valve
Dispositif d'ajustage pour l'impédance d'un circuit magnétique d'une vanne électromagnétique

(30) Priorität: 13.08.1996 DE 19632552
(43) Veröffentlichungstag der Anmeldung: 25.02.1998
(73) Patentinhaber: HONEYWELL B.V., 1101 EA Amsterdam Z.O. (NL)
(72) Erfinder: Capel, Denis, 7814 XM Emmen (NL)
(74) Vertreter: Leson, Thomas Johannes Alois, Dipl.-Ing.

(56) Entgegenhaltungen:
- EP-A- 0 464 370
- DE-A- 3 236 615
- GB-A- 2 291 540
- US-A- 4 610 428
- US-A- 5 065 979
- PATENT ABSTRACTS OF JAPAN vol. 9, no. 149 (M-390), 25.Juni 1985 & JP 60 026870 A (TOYODA KOKI KK), 9.Februar 1985,

## Beschreibung

Die Erfindung betrifft eine Einstellvorrichtung für den magnetischen Widerstand eines Magnetkreises in einem Magnetventil gemäß Gattungsbegriff des Patentanspruchs. Bei einem aus DE 42 11 913 A1 bekannten magnetbetätigten Druckregelventil mit einer Einstellvorrichtung dieser Art hat der im Innern des Spulenträgers verschiebbare Magnetanker eine aufder vom Ventilkörper abgewandten Seite offene becherförmige Gestalt, wobei in den Innenraum des Magnetankers ein im wesentlichen zylindrisches Justierelement hineinragt. Dieses Justierelement ist im Innengewinde eines hohlzylindrischen Polstücks axial verstellbar, welches seinerseits mit seinem Außengewinde in dem dem Schließkörper abgewandten Magnetjoch des die Erregerspule aufnehmenden magnetischen Kreises ebenfalls axial verstellbar ist.

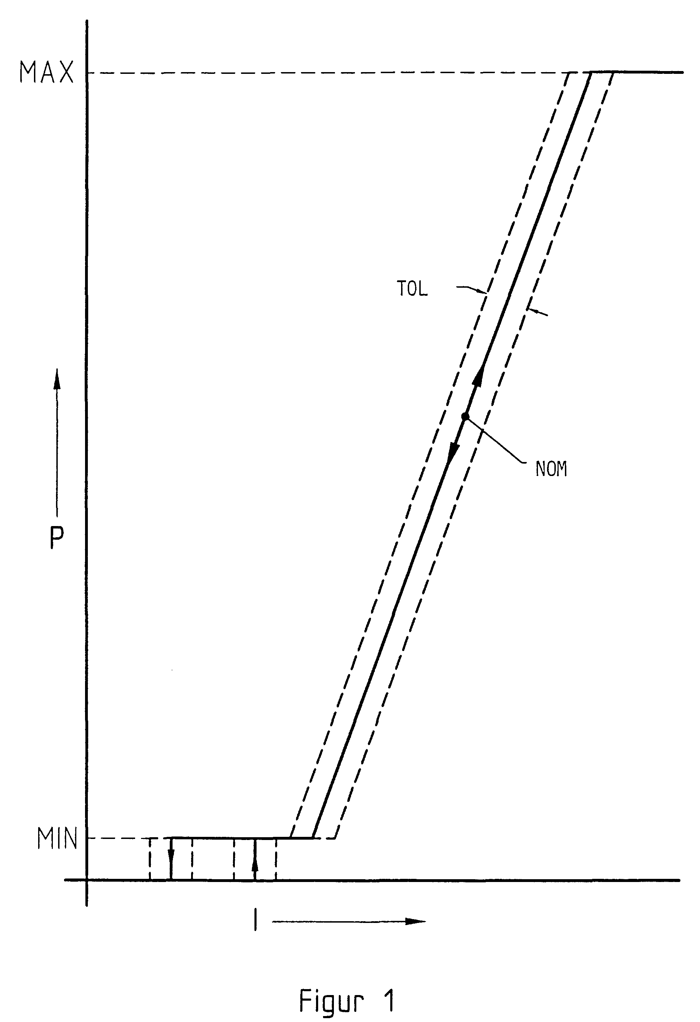

Zum Einstellen des Maximal- oder Minimaldrucks von über einen Magnetantrieb steuerbaren Gasdruckreglern sind beispielsweise aus EP 0 039 000 A1, EP 0 490 356 A1 und EP 0 522 188 A1 verschiedene, von außen zugängige Einstellvorrichtungen bekannt. Die Modulationskennlinie eines solchen Druckreglers ist in Figur 1 schematisch wiedergegeben, wo der Ausgangsdruck P des Druckreglers über dem Erregerstrom I durch die Spule des Magnetantriebs aufgetragen ist. Dabei zeigt die ausgezogene Kurve die gewünschte Nominalcharakteristik oder Nennkurve NOM, während die gestrichelten Kurven TOL einen in erster Linie durch Fertigungstoleranzen bedingten Streubereich zu beiden Seiten der Nennkurve einschließen.

Es ist jedoch erwünscht und daher Aufgabe der Erfindung, alle Druckregler einer Serie mit einfachen Mitteln auf eine gemeinsame Nennkurve abgleichen zu können. Dies gelingt mit der im Anspruch gekennzeichneten Erfindung. Mit ihr wird der magnetische Widerstand des Magnetkreises im Bereich zwischen Anker und Rückschlußjoch so verändert, daß hiermit durch Fertigungstoleranzen an beliebiger Stelle des Magnetantriebs hervorgerufene Abweichungen vom Nennwert kompensiert werden.

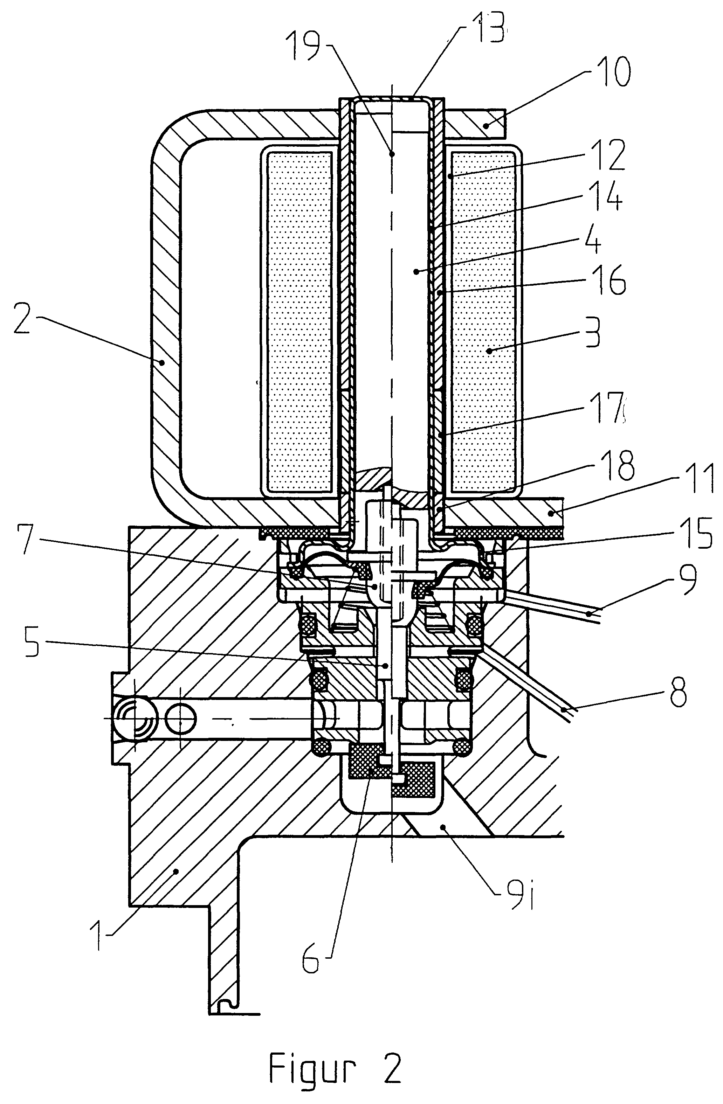

Die Erfindung wird nachfolgend anhand eines in Figur 2 wiedergegebenen Ausführungsbeispiels erläutert. Der mechanische Aufbau des dort gezeigten modulierenden Druckreglers stimmt mit demjenigen der älteren Anmeldung DE 195 15 286 A1 in großen Teilen überein, so daß hier auf eine ausführliche Beschreibung der Wirkungsweise verzichtet werden kann. Beim dort beschriebenen Druckregler zum Erzeugen des Steuerdrucks für ein membrangesteuertes Gasventil wird der Ausgangssteuerdruck des Druckreglers durch einen elektromagnetischen Linearantrieb vorgegeben, welcher zugleich den Einschaltantrieb für ein dem Druckregler vorgeschaltetes Einschaltventil bildet.

In Figur 2 ist aufdas Ventilgehäuse 1 ein Magnetantrieb aufgesetzt, der im wesentlichen aus einem U-förmigen Magnetjoch 2, einer Erregerspule 3 sowie einem darin verschiebbaren Anker 4 besteht. Rechts von der Mittellinie 19 ist der Anker 4 in der Arbeitsposition des Ventils und links von der Mittellinie in der Ruhestellung wiedergegeben. Gleiches gilt für die Ventilstange 5 und die Schließkörper 6 und 7.

Der Anker 4 liegt mit seinem unteren, mit einer Vertiefung versehenen Ende am oberen Ende einer Ventilstange 5 an, welche an ihrem unteren Ende den Schließkörper 6 eines Einschaltventils und in ihrem oberen Bereich den Ventilkörper 7 eines der Modulation des Ausgangsdrucks dienenden Abblasventils trägt. Die Leitung 8 führt zur Antriebskammer eines Servoventils, während die Leitung 9 mit dem Auslaß des von dem Servoventil gesteuerten Gasreglers in Verbindung steht. Leitung 9i kommt vom Einlaß.

Zwischen dem oberen Schenkel 10 und dem unteren Schenkel 11 des Magnetjochs 2 ist ein nicht-magnetischer Träger 12 für die Erregerspule 3 angeordnet. Eine ebenfalls nichtmagnetische und an ihrem oberen Ende 13 verschlossene Ankerhülse 14 umschließt den Hubweg des Ankers 4 und ist mit ihrem unteren erweiterten Ende 15 im Ventilgehäuse 1 abgedichtet eingespannt. In den langgestreckten Ringspalt zwischen Träger 12 und Ankerhülse 14 sind mehrere Hülsen 16, 17 und 18 hintereinander eingesetzt. Hiervon bestehen die Hülsen 16 und 18 aus magnetisierbarem Material. während die Hülse 17 unmagnetisch ist und beispielsweise aus Kunststoff besteht. Die untere Hülse 18 bildet ein Polstück zwischen dem unteren Schenkel 11 des Magnetjochs 2 und dem unteren Ende des Ankers 4. Je nach Stellung dieses Polstücks 18 im Spalt zwischen Magnetjoch 11, und Anker 4 ändert sich der magnetische Widerstand dieses Spalts. Durch axiales Verstellen der als Polstück dienenden Hülse 18 kann der magnetische Widerstand im Bereich zwischen Magnetjoch 11 und Anker 4 in der Ruhestellung und ggf. auch in der Arbeitsstellung verändert werden. Hierdurch läßt sich der Magnetantrieb in der gewünschten Weise abgleichen, so daß die Ausgangskennlinie des erzeugten Gasdrucks auf den Nennwert eingestellt wird. Dies geschieht dadurch, daß man von oben die Hülsen 16, 17 und 18 mehr oder weniger tief in den Träger 12 eindrückt.

Bei einer anderen Ausführungsform kann zum Verstellen der Hülse 18 an der Hülse 16 ein Gewinde und im oberen Schenkel 10 des Magnetjochs 2 ein Gegengewinde vorgesehen sein. Weiterhin kann die Verstellung des magnetischen Widerstandes des Magnetkreises nicht nur im unteren, sondern auch im oberen Überlappungsbereich zwischen Anker 4 und Magnetjoch 10, 2 vorgenommen werden. Dann befindet sich die langgestreckte Magnethülse 16 am unteren Ende und das Polstück 18 oben und läßt sich mehr oder weniger tief in den Spalt zwischen Magnetschenkel 10 und Ankerhülse 14 einschieben oder einschrauben. Von besonderem Vorteil bei all diesen Lösungen ist, daß der Abgleich des Magnetantriebs nach dessen Zusammenbau von außen erfolgen kann und kein Eingriff in den abgedichteten Innenraum von Magnetantrieb oder Ventilgehäuse erforderlich ist.

## Patentansprüche

1. Einstellvorrichtung für den magnetischen Widerstand eines Magnetkreises in einem Magnetventil mit:
a) einer auf einem hohlzylindrischen Träger (12) aufgewickelten Erregerspule (3);
b) einem den Träger (12) haltenden magnetischen Rückschlußjoch (2, 10, 11), und
c) einem im Träger (12) verschiebbaren, einen Schließkörper (6, 7) des Magnetventils steuernden Anker (4); wobei
d) zwischen dem Anker (4) und einem benachbarten Teil (11, 10) des Rückschlußjochs (2, 10, 11) ein axial verstellbares Polstück (18) zur Veränderung des magnetischen Widerstands angeordnet ist,
**dadurch gekennzeichnet,daß**
e) der Anker (4) in einer in den Träger (12) eingesetzten, nichtmagnetischen Ankerhülse (14) verschiebbar ist, wobei zwischen der Ankerhülse (14) und dem Träger (12) ein Ringspalt besteht;
f) das Polstück als eine die Ankerhülse (14) umgebende erste Hülse (18) aus magnetischem Material ausgebildet ist;
g) in den Ringspalt zwischen Ankerhülse (14) und Träger (12) im Anschluß an die erste Hülse (18) eine zweite Hülse (17) aus nichtmagnetischem Material sowie eine dritte Hülse (16) aus Magnetmaterial eingesetzt ist, wobei die dritte Hülse durch den dem benachbarten Teil (11; 10) gegenüberliegenden Teil (10; 11) des Rückschlußjochs (2, 10, 11) hindurchragt.

## Claims

1. Adjustment apparatus for the magnetic reluctance of a magnetic circuit of a solenoid valve having:
a) a field coil (3) which is wound on a hollow cylindrical support (12);
b) a magnetic return-path yoke (2, 10, 11) which holds the support (12), and
c) an armature (4) which can be moved in the support (12) and controls a closing body (6, 7) of the solenoid valve; with
d) an axially moveable pole piece (18) being arranged between the armature (4) and an adjacent part (11, 10) of the return-path yoke (2, 10, 11) in order to vary the magnetic reluctance,
**characterized in that**
e) the armature (4) can be moved in a nonmagnetic armature sleeve (14) which is inserted into the support (12), with there being an annular gap between the armature sleeve (14) and the support (12);
f) the pole piece is in the form of a first sleeve (18) which surrounds the armature sleeve (14) and is composed of magnetic material;
g) a second sleeve (17) composed of nonmagnetic material and a third sleeve (16) composed of magnetic material are inserted into the annular gap between the armature sleeve (14) and the support (12), following the first sleeve (18), with the third sleeve projecting through that part (10; 11) of the return-path yoke (2, 10, 11) which is opposite the adjacent part (11; 10).

## Revendications

1. Dispositif de réglage de la réluctance d'un circuit magnétique dans une électrovanne, avec:
a) une bobine d'excitation (3) bobinée sur un support cylindrique creux (12);
b) une culasse magnétique (2, 10, 11) portant le support (12); et
c) un noyau (4) mobile dans le support (12), actionnant un corps de fermeture (6, 7) de l'électrovanne; dans lequel
d) une pièce polaire (18) déplaçable en direction axiale pour modifier la réluctance est disposée entre le noyau (4) et une partie voisine (11, 10) de la culasse (2, 10, 11),
**caractérisé en ce que**
e) le noyau (4) est mobile dans une gaine de noyau (14) non magnétique, insérée dans le support (12), une fente annulaire existant entre la gaine de noyau (14) et le support (12);
f) la pièce polaire a la forme d'une première douille (18) en matériau magnétique entourant la gaine de noyau (14);
g) dans la fente annulaire entre la gaine de noyau (14) et le support (12) sont insérées, à la suite de la première douille (18), une deuxième douille (17) en matériau non magnétique ainsi qu'une troisième douille (16) en matériau magnétique, la troisième douille traversant la partie (10; 11) de la culasse (2, 10, 11) située en face de la partie voisine (11; 10).
